# EUROPEAN PATENT SPECIFICATION

(11) **EP 2 770 645 B1**
(45) Date of publication and mention of the grant of the patent: **31.01.2018**
(21) Application number: 13156226.6
(22) Date of filing: 21.02.2013
(51) Int. Cl.: H04B 5/00, H02J 50/20, H02J 7/02, H02J 7/00

(54) **Non-galvanic connector**
Nichtgalavnischer Verbinder
Connecteur non galvanique

(43) Date of publication of application: 27.08.2014
(73) Proprietor: NXP B.V., 5656 AG Eindhoven (NL)
(72) Inventor: Vaucher, Cicero Silveira, Redhill, Surrey RH1 1SH (GB); Roovers, Raf Lodewijk Jan, Redhill, Surrey RH1 1SH (GB)
(74) Representative: Miles, John Richard

(56) References cited:
- US-A1- 2011 143 702
- US-A1- 2013 029 595
- US-A1- 2013 029 597

## Description

This invention relates to an apparatus for non-galvanic connection between two or more electrical circuits.
Galvanic connectors are widely used in electronic systems. An example of a galvanic connection is a peripheral device connected via an USB cable to a host device. In the most general case the host provides power to the peripheral device via the USB cable, and bidirectional high-speed data communication takes place across the same cable; in USB2.0 a separate pair of wires is allocated to power and data transfer. The galvanic connection via a cable forms an ohmic contact allowing a high degree of communication reliability between the host and the peripheral device whence the connection is made by plugging the cable into the USB port.
However, galvanic connectors are prone to wear and tear leading to functional failure consequence for example in a USB connection due to repeatedly plugging and unplugging a USB cable, both in consumer electronics as well as in professional systems. In addition, connectors for high-speed links such as HDMI and high-pin count applications such as docking station for a laptop increase the cost of the system considerably.
Consumer electronics systems show reliability problems with galvanic connectors, for example SD memory cards that get damaged due to mechanical stress during socket insertion and ejection.
Professional applications include reconfigurable MRI scanners and systems with moving parts such as wafer steppers. In these examples there is a large amount of data to be transferred from the MRI sensor/digitizer and from the wafer stage towards a central processing unit or host, in addition to the power function. The connectors tend to get dirty and/or break after a limited operation time, increasing machine down-time and maintenance cost for equipment owners.
Physical connectors also may limit the operational design freedom in industrial production lines, for example in conveyor belt systems.

US 2013/029595 A1 discloses a system for wireless power and data transfer between a base unit and an electric vehicle.

US 2011/143702 A1 discloses a system for close proximity wireless communication with holding means for fixing the relative position between the communicating apparatuses.

US 2013/029597 A1 discloses that a mobile computing device can be in authenticated proximity transmission with two devices. J

Various aspects of the invention are defined in the accompanying claims. In a first aspect there is defined a base-unit for non-galvanic coupling to a contactless-unit according to claim 1

The replacement of the galvanic connection with a non-galvanic connection provides an increased level of robustness. The authentication controller provides an equivalent level of security as provided by a wired connection using a galvanic connector and ensures that the connection is formed between the base unit and the contactless unit only when intended. To be considered to be in physical proximity, the base unit should be within a distance of one metre of a contactless unit.

The term antenna may also be considered to include an inductor, a coil or other element capable of magnetic or electromagnetic coupling. Payload data may be considered to include any data other than data used to authenticate the connection. The term RF may include frequencies above 30 KHz.

Periodically re-authenticating the connection further improves the security of the connection and provides an equivalent function to a galvanic wired connection being unplugged.

The base unit includes a mechanical connector or coupling element which may plug into a mechanical connector of a contactless unit or vice versa. This may replace a conventional galvanic connector. In an embodiment of the base-unit, the authentication controller is coupled to the RF power source and the authentication controller is operable to disable RF power transmission if the authentication of the non-galvanic connection fails.

Disabling the power source in the base unit if authentication fails improves the security of the connection.

In an embodiment, the at least one data link comprises a first data-link element coupled to the at least one antenna and a second data-link element, the first and second data-link elements being coupled to the authentication controller, wherein the first data-link element comprises a near field communication circuit and the base-unit is operable to transmit and/or receive authentication data via the first data-link element to authenticate a non-galvanic connection to a contactless-unit in physical proximity to the base-unit, and transmit and/or receive data between the base-unit and the contactless-unit via the second data link element following the authentication of the non-galvanic connection via the first data-link element.

In embodiments using near field communication, the authentication controller may be coupled to the RF power source and wherein the authentication controller is operable to enable the RF power transmission following the authentication of the non-galvanic connection. Sufficient power to authenticate the connection may be supplied via the near field communication (NFC) data link. Following successful authentication the main power source can be enabled. This can reduce the power consumption of the base unit and also improve the security of the non galvanic connection.

In some embodiments the data-link may comprise a laser configured for optical data transmission and a photodetector for data reception, or a millimetre wave transmitter for data transmission and a millimetre wave receiver for data reception. Data transmission via optical or millimetre waves does not require a galvanic connection. A polymer waveguide can be used as an additional pipe offering high-speed data-communication, which may be at data rates up to many gigabits per second, across longer distances between the base-unit and the contactless-unit; for these embodiments, the link may not be considered as wireless in the most general sense of the word; however there is no reliance on galvanic connections to accomplish data transfer.

In embodiments, the base-unit may include a first antenna coupled to the RF power source, a second antenna coupled to the first data link and a third antenna coupled to the second data-link and wherein the second data link element is configured for RF transmission and/or reception. The second data link may comprise a third antenna coupled to at least one of an RF transmitter and an RF receiver.

In a second aspect there is described a contactless-unit for non-galvanic coupling to a base-unit according to claim 8. The features of the contactless unit are complementary to a base unit and allow a non-galvanic connection to transfer data and power between two or more circuits.

In an embodiment of the contactless unit, the at least one data-link comprises at least one of a millimetre wave transmitter, a millimetre wave receiver, a laser, and a photodetector.

In an embodiment of the contactless-unit the at least one data link comprises a first data-link and a second data-link, the first and second data-links being coupled to the authentication controller, wherein the first data-link comprises a second antenna coupled to a near field communication circuit and the contactless-unit is operable to transmit and/or receive authentication data via the first data-link to authenticate a non-galvanic connection to a base-unit only when the base unit is placed in physical proximity to the contactless-unit, and transmit and/or receive payload data via the second data link following the authentication of the non-galvanic connection to a base unit via the first data-link.

In embodiments the contactless-unit includes a third data-link coupled to the authentication controller, the third data-link comprising a near field communication circuit coupled to a fourth antenna, a fourth data-link coupled to the authentication controller, a fifth antenna coupled to an RF power source wherein the contactless-unit is further operable to transmit RF power to a further contactless-unit in physical proximity to the contactless unit, transmit and/or receive authentication data via the third data-link to authenticate a non-galvanic connection to a further contactless-unit only when the further contactless-unit is in physical proximity to the contactless-unit, and transmit and/or receive data between the contactless-unit and the further contactless-unit via the fourth data link element following the authentication of the non-galvanic connection.

Having a third and fourth data links allows daisy chaining of a base unit and multiple contactless units

In an embodiment the contactless unit may include at least one of a sensor (and a storage element coupled to the data interface.

In an embodiment, a second data link of the contactless unit may comprise a third antenna coupled to at least one of an RF transmitter and an RF receiver.

Embodiments of the invention are now described in detail, by way of example only, illustrated by the accompanying drawings in which:
Figure 1 shows a base unit according to an embodiment.
Figure 2 illustrates a contactless unit according to an embodiment.
Figure 3 shows a base unit of the embodiment of figure 1 coupled to a contactless unit of the embodiment of figure 2.
Figure 4 illustrates a base unit and a contactless unit according to a further embodiment.
Figure 5 shows an example authentication sequence of the embodiment of figure 4.
Figure 6 shows a base unit and a contactless unit according to a further embodiment.
Figure 7 illustrates a base unit and a contactless unit according to a further embodiment.
Figure 8 shows a base unit and a contactless unit according to a further embodiment.

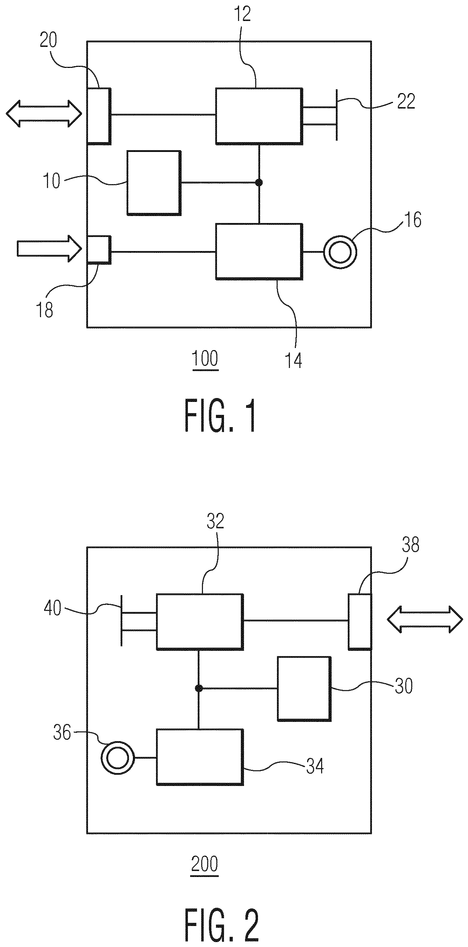

Figure 1 shows a base unit 100. Base unit authentication controller 10 is connected to RF power circuit 14. An output of RF power circuit 14 may be connected to antenna 16. An input of RF power circuit 14 may be connected to DC power terminal 18. Data Interface 20 may be connected to data Interface circuit 12. An output of data interface circuit 12 may be connected to a millimetre wave transmitter 22. Data interface circuit 12 and millimetre wave transmitter 22 and may form a base unit data link.

Figure 2 illustrates an embodiment of a contactless unit 200. Contactless unit authentication controller 30 may be connected to RF power receiver 34. A terminal of RF power receiver 34 is connected to an antenna 36. Contactless unit authentication controller 30 may be connected to data interface circuit 32. A terminal of data interface circuit 32 may be connected to a millimetre wave receiver 40. Contactless unit authentication controller 30 is connected to data input circuit 32. An output of contactless unit authentication controller 30 may be connected to contactless unit data interface 38.

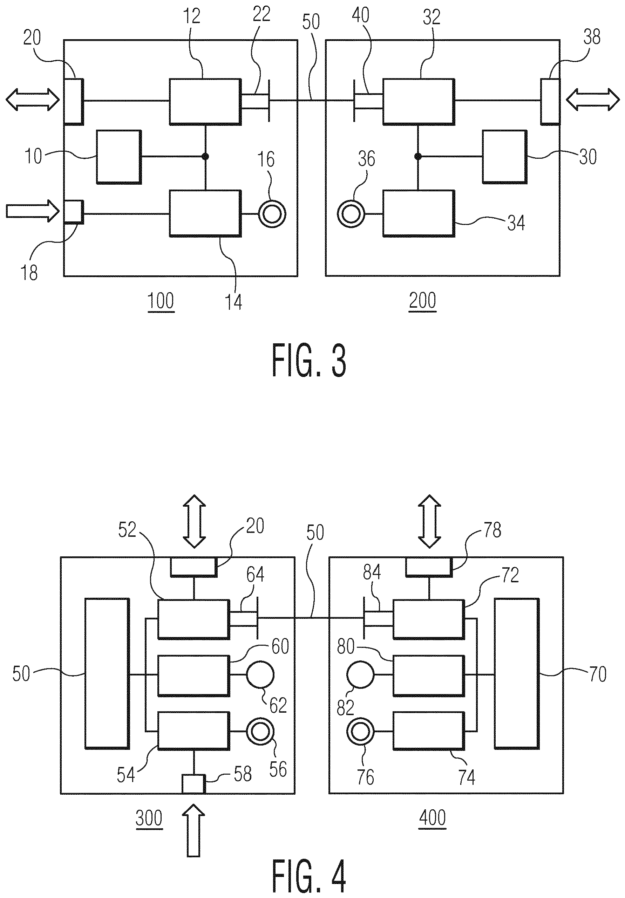

Figure 3 shows base unit 100 of figure 1 connected to a contactless unit 200 of figure 2 with a polymer waveguide 50. The base unit authentication controller 10 may send authentication data at a first data rate via the base unit data link formed by data interface circuit 12 and millimetre wave transmitter 22. Payload data at a second data rate which may be higher than the authentication data rate may be received from data interface 20 and transmitted via the data link formed by the data interface circuit 12 and the millimetre wave transmitter. Power may be transmitted from RF power source 14 via antenna 16. Power may be supplied to the base unit from DC power input terminal 18. Provided that the contactless unit 200 is in physical proximity with the base unit 100, the power transmitted by the RF power source may be received by the RF power receiver 34 via antenna 36. The received RF power may be used to power the remaining circuitry in contactless unit 200. Authentication data transmitted from the base unit 100 may be detected by the millimetre wave receiver 40 and received by contactless unit data interface circuit 32. The authentication data may be received by contactless unit authentication controller 30. Contactless unit authentication controller 30 may then authenticate the connection between the base unit 100 and the contactless unit 200. Contactless unit authentication controller 30 may enable contactless unit data interface circuit 32 to couple further received payload data to contactless unit data interface 38. Contactless unit data interface 38 may be connected by either a galvanic or non-galvanic connection to a further circuit. The data link and the RF power link form a non-galvanic connection between the base unit and the contactless unit. The authentication process prior to payload data transmission may be considered to be equivalent to plugging in a wired connection. The term contactless unit refers to the contactless property of the non-galvanic electrical coupling, so the contactless unit may touch the base unit.

In embodiments the RF power source 14 may supply sufficient power to power a contactless unit within a range of two metres of the base unit. In further embodiments the base unit 100 may have a millimetre wave receiver instead of a millimetre wave transmitter and the contactless unit 200 may have a millimetre wave transmitter instead of a millimetre wave receiver 40. In this case the contactless unit 200 receives power from a base unit 100 in proximity to the contactless unit, and the contactless unit authentication controller 30 may transmit authentication data to the base unit 100. The base unit 100 may enable the connection between the data interface circuit 12 and the data interface 20 for transmitting any received payload data from the contactless unit 200. In some embodiments the authentication data may be periodically retransmitted either from the base unit 100 or the contactless unit 200. In some embodiments, the polymer waveguide 50 coupling the base unit 100 and contactless unit 200 may be omitted if the base unit 100 and contactless unit 200 are physically aligned such that the millimetre wave receiver can detect data transmitted by the millimetre wave transmitter. In embodiments this may be achieved by forming at least part of the base unit into a plug and forming at least part of the contactless unit into a socket or vice versa. In embodiments the base unit and contactless unit may include a magnet or ferromagnetic material and the base unit and contactless unit may be physically aligned by magnetic coupling.

In embodiments the millimetre wave transmitter may be replaced by a light emitting diode (LED) or Laser transmitter and the millimetre wave receiver may be replaced by a photodetector. In these embodiments an optical link may be formed between a base unit and contactless unit.

Figure 4 shows a base unit 300. Base unit authentication controller 50 may be connected to RF power circuit 54. The output of RF power circuit 54 may be connected to antenna 56. An input of RF power circuit 14 may be connected to DC power terminal 58. Data Interface 20 may be connected to data Interface circuit 52. An output of data Interface circuit 52 may be connected to a millimetre wave transceiver 64. Data interface circuit 52 and millimetre wave transceiver 64 may form a base unit data-link. Base unit authentication controller 50 is connected to near field communication circuit 60. Near field communication circuit 60 is connected to antenna 62. Near field communication circuit 60 and antenna 62 may form a base unit NFC link.

Figure 4 further illustrates an embodiment of a contactless unit 400. Contactless unit authentication controller 70 may be connected to RF power receiver 74. A terminal of RF power receiver 74 is connected to an antenna 76. Contactless unit authentication controller 70 may be connected to data interface circuit 72. A terminal of data interface circuit 72 may be connected to a millimetre wave-transceiver 84. Data interface circuit 72 and millimetre wave transceiver 84 may form a contactless unit data link. Contactless unit authentication controller 70 is connected to data interface circuit 72. An output of contactless unit authentication controller 70 may be connected to contactless unit data interface 78. Contactless unit authentication controller 70 is connected to near field communication circuit 80. Near field communication circuit 80 is connected to antenna 82. Near field communication circuit 80 and antenna 82 may form a contactless unit NFC link.

In operation the base unit authentication controller 50 may enable authentication data to be sent via the base unit NFC link. When a contactless unit is in proximity to the base unit, the base unit NFC link may also provide power to the contactless unit NFC link and contactless unit authentication controller 70 in the contactless unit 400, the RF power may be disabled until after the successful authentication of the connection between the base unit 300 and the contactless unit 400. Payload data received from data interface 20 may be transmitted via the base unit data-link. Payload data received from a contactless unit 400 via the base unit data link may be transmitted to further circuitry via the data interface 20. Power may be transmitted from RF power source 14 via antenna 16. Power may be supplied to the base unit from DC power input terminal 18. Provided that the contactless unit 200 is in physical proximity with the base unit 100, the power transmitted by the RF power source may be received by the RF power receiver 34 via antenna 36. The received RF power may be used to power the circuitry in contactless unit 400.

Authentication data transmitted from the base unit NFC link may be detected and received by contactless unit NFC circuit 80. The authentication data may be received by contactless unit authentication controller 70. Contactless unit authentication controller 70 may then authenticate the connection between the base unit 300 and the contactless unit 400. Contactless unit authentication controller 70 may enable contactless unit data circuit 72 to couple further received payload data to contactless unit data interface 78. Contactless unit data interface 78 may be connected by either a galvanic or non-galvanic connection to a further circuit.

Authentication data transmitted from the contactless unit NFC link may be detected and received by base unit NFC circuit 60. The authentication data may be received by base unit authentication controller 50. Base unit authentication controller 50 may then authenticate the connection between the base unit 300 and the contactless unit 400. Base unit authentication controller 50 may enable base unit data circuit 52 to couple further received payload data to base unit data interface 20. The base unit data interface 20 may be connected by either a galvanic or non-galvanic connection to a further circuit.

Since the authentication takes place via the NFC link, the authentication process can use much lower power and frequencies than the subsequent payload data transfer.

The data link, the NFC link and the RF power link form a non-galvanic connection between the base unit 300 and the contactless unit 400. The authentication process prior to payload data transmission may be considered as equivalent to forming a galvanic connection by plugging in a connector in a conventional wired connection.

Since the NFC link only works over a short range, typically less than 50 centimetres, the connection can only be established when the base unit 300 and the contactless unit 400 are in physical proximity. In some embodiments of the base unit, the RF power circuit 54 may share an antenna or coil with NFC circuit 60. In embodiments of the contactless unit, the RF power receiver 74 may share an antenna or coil with contact-less unit NFC circuit 80. Embodiments of the base unit NFC circuit 60 may include a secure element containing the authentication data required to authenticate the connection. Embodiments of the base unit NFC circuit 60 may include a secure element containing the authentication data required to authenticate the connection.

In embodiments, the millimetre wave transceiver may be replaced by a photo-transceiver in the base unit and the contactless unit.

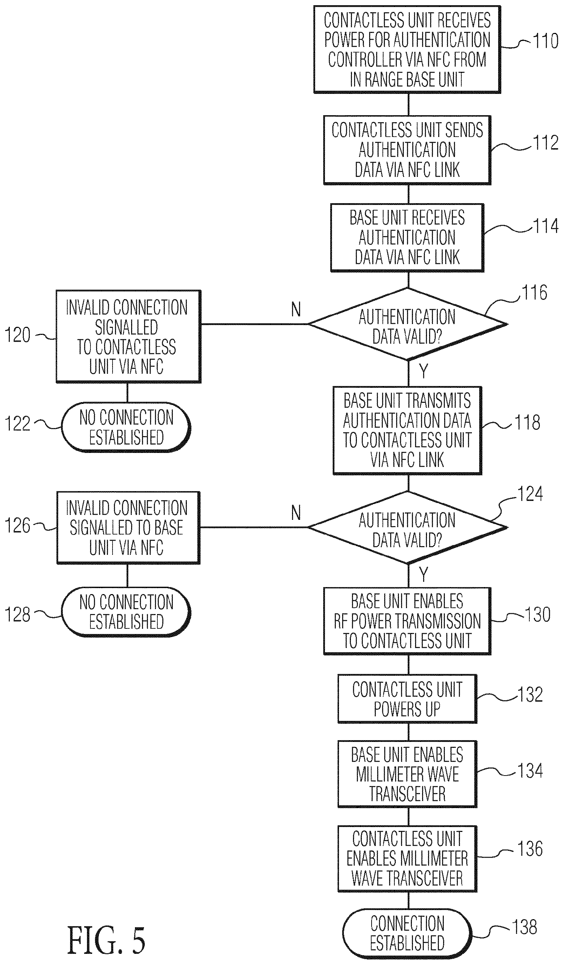

Figure 5 illustrates an example authentication sequence for the base unit 300 and contactless unit 400. In step 110 contactless unit 400 receives power for the authentication controller 70 via the NFC link from a base unit 300 within range. Once the authentication controller 70 is powered up contactless unit 400 may send authentication data via the NFC link in step 112. In step 114 base unit 300 receives authentication data via the NFC link. Base unit 300 may then check that the authentication data is valid in step 116. If the base unit authentication controller 50 determines that the authentication data is not valid then in step 120 and invalid connection is signalled to contactless unit 400 via NFC. The authentication sequence is then terminated in step 122 and no connection is established. In step 116 if the authentication data is valid then the sequence moves to step 118 where base unit 300 may transmit authentication data to contactless unit 400 via the NFC link. In step 124 the contactless unit 400 then checks whether the authentication data received from the base unit 300 is valid. If the authentication data is not valid then contactless unit signals an invalid connection to base unit 300 via the NFC link in step 126. The authentication sequence is then terminated in step 128 and no connection is established. In step 124 if the authentication data received by the contactless unit 400 is valid then the base unit 300 enables the RF power transmission to the contactless unit 400 in step 130. The contactless unit powers up in step 132. In step 134 base unit 300 enables the high data rate millimetre wave transceiver 52. In step 136 the contactless unit 400 enables the high data rate millimetre wave transceiver 84. The authentication sequence terminates in step 138 and the non galvanic between base unit 300 and contactless unit 400 is established.

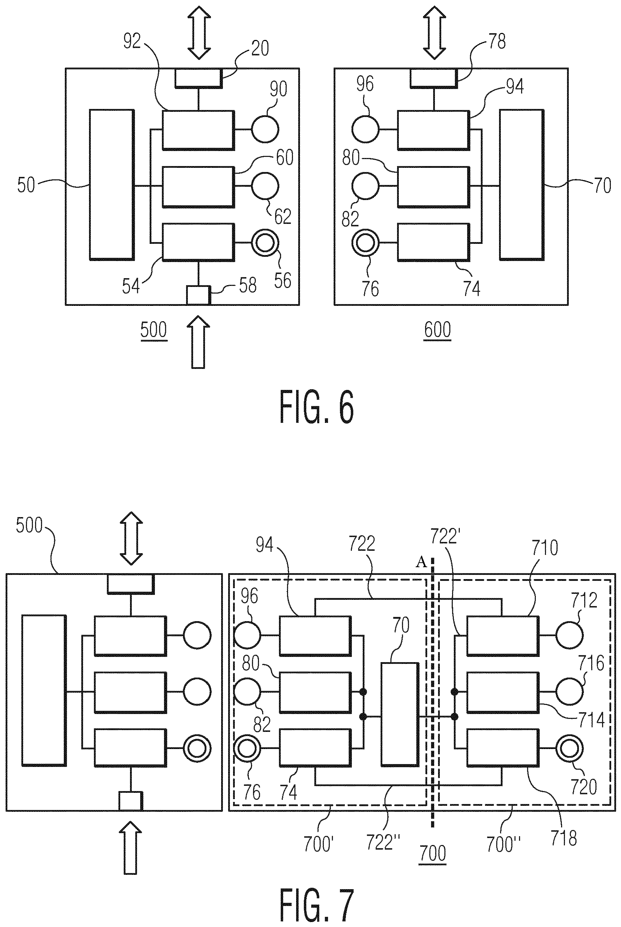

Figure 6 shows a base unit 500. Base unit authentication controller 50 may be connected to RF power circuit 54. The output of RF power circuit 54 may be connected to antenna 56. An input of RF power circuit 54 may be connected to DC power terminal 58. Data Interface 20 may be connected to RF transponder circuit 92. An output of RF transponder circuit 92 may be connected to an antenna 90. RF transponder circuit 92 and antenna 90 may form a high speed RF data link. Base unit authentication controller 50 is connected to near field communication circuit 60. Near field communication circuit 60 is connected to antenna 62. Near field communication circuit 60 and antenna 62 may form a base unit NFC link.

Figure 6 further illustrates an embodiment of a contactless unit 600. Contactless unit authentication controller 70 may be connected to RF power receiver 74. A terminal of RF power receiver 74 is connected to an antenna 76. Contactless unit authentication controller 70 may be connected to RF transponder circuit 94. A terminal of RF transponder circuit 94 may be connected to a RF transponder antenna 96. Data interface circuit 72 and photo-transceiver 84 may form a contactless unit data link. Contactless unit authentication controller 70 is connected to data interface circuit 72. An output of contactless unit authentication controller 70 may be connected to contactless unit data interface 94. Contactless unit authentication controller 70 is connected to near field communication circuit 80. Near field communication circuit 80 is connected to antenna 82. Near field communication circuit 80 and antenna 82 may form a contactless unit NFC link.

In operation the base unit authentication controller 50 may enable authentication data to be sent via the base unit NFC link. When a contactless unit is in proximity to the base unit, the base unit NFC link may also provide power to the contactless unit NFC link and contactless unit authentication controller 70 in the contactless unit 600, the RF power may be disabled until after the successful authentication of the connection between the base unit 500 and the contactless unit 600. Payload data received from data interface 20 may be transmitted via the base unit data link. Payload data received from a contactless unit 600 via the base unit data link may be transmitted to further circuitry via the data interface 20. Power may be transmitted from RF power source 14 via antenna 16. Power may be supplied to the base unit from DC power input terminal 18. Provided that the contactless unit 600 is in physical proximity with the base unit 500, the power transmitted by the RF power source may be received by the RF power receiver 74 via antenna 76. The received RF power may be used to power the circuitry in contactless unit 600.

Authentication data transmitted from the base unit NFC link may be detected and received by contactless unit NFC circuit 80. The authentication data may be received by contactless unit authentication controller 70. Contactless unit authentication controller 70 may then authenticate the connection between the base unit 500 and the contactless unit 600. Contactless unit authentication controller 70 may enable contactless unit data circuit 94 to couple further received payload data to contactless unit data interface 78. Contactless unit data interface 78 may be connected by either a galvanic or non-galvanic connection to a further circuit.

Authentication data transmitted from the contactless unit NFC link may be detected and received by base unit NFC circuit 60. The authentication data may be received by base unit authentication controller 50. Base unit authentication controller 50 may then authenticate the connection between the base unit 500 and the contactless unit 600. Base unit authentication controller 50 may enable base unit data circuit 92 to couple further received payload data to base unit data interface 20. The base unit data interface 20 may be connected by either a galvanic or non-galvanic connection to a further circuit.

Since the authentication takes place via the NFC link, the authentication process can use much lower power and frequencies than the subsequent payload data transfer. The data transfer speed of the NFC link may typically be 400 Kbits per second.

The data transfer speed of the base unit data link and the contactless unit data link may be up to 40 Gigabits per second. The typical data transfer speed of the base unit data link and the contactless unit data link may be in the region of 5 gigabits per second for a USB transfer. For some applications the transfer speed may be in the region of a few hundred Megabits per second.

The contactless unit 700 illustrated in figure 7 has contactless unit authentication controller 70 which may be connected to RF power receiver 74. A terminal of RF power receiver 74 is connected to an antenna 76. Contactless unit authentication controller 70 may be connected to RF transponder circuit 94. A terminal of RF transponder circuit 94 may be connected to a RF transponder antenna 96. RF transponder circuit 94 and RF transponder antenna 96 may form a contactless unit data link. Contactless unit authentication controller 70 is connected to a near field communication circuit 80. Near field communication circuit 80 is connected to antenna 2. Near field communication circuit 80 and antenna 82 may form a contactless unit NFC link.

First RF transponder circuit 94 may be connected to a second RF transponder circuit 710 by flexible wiring 722. A terminal of the second RF transponder circuit 710 may be connected to a second RF transponder antenna 712. The second RF transponder circuit 710 and RF transponder antenna 712 may form a contactless unit data link. Contactless unit authentication controller 70 may be connected to second RF transponder circuit 710 by flexible wiring 722'. Contactless unit authentication controller 70 is connected to second near field communication circuit 714 by a flexible wiring 722'. The second near field communication circuit 714 may be connected to second NFC antenna 716. Second near field communication circuit 714 and antenna 716 may form a second NFC link. Contactless unit authentication controller 70 may be connected to RF power transmitter 718 by flexible wiring 722'. The RF power receiver 74 may be connected to a RF power transmitter 718 by flexible wiring 722". RF power transmitter 718 may be connected to RF power antenna 720. In operation the contactless unit may receive power and data from a base unit 500 following successful authentication. The contactless unit 700 may then retransmit data via the second data link and may transmit power via the power transmitter following successful authentication of a further contactless unit via the second NFC link. The contactless unit may receive data via the second data link and transmit data to base unit 500. This allows potentially daisy chaining of contactless units. The contactless unit 700 may be split along the axis A into a left hand portion 700' and a right hand portion 700". Left hand portion 700' and right hand portion 700" may be able to move with respect to each other. In embodiments, contactless unit 700 may be mounted either side of a joint of a robot arm such that each portion of contactless unit can move independently. In other embodiments base unit 500 may be a PC docking station, left hand portion of contactless unit 700' may be included in a PC and right hand portion of contactless unit 700" may be included in a peripheral device such as a printer.

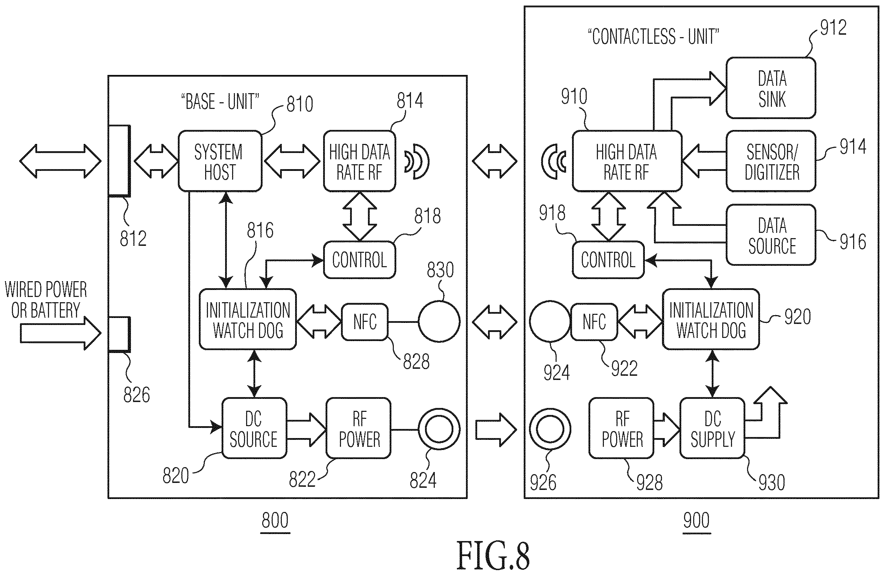

Figure 8 shows a base unit 800 having a system host 810 which may connect to a data interface 812. System host 810 may be connected to high data rate RF transponder 814. System host 810 may be connected to initialisation watchdog 816. System host 810 may be connected to DC source 820. Initialisation watchdog 816 may be connected to control register 818. Control register 818 may be connected to high data rate RF transponder 814. DC source 820 may be connected to RF power source 822. RF power source 822 may be connected to RF power antenna 824. The power for base unit 800 may be supplied by a wired that power or battery connection connected to terminal 826.

The system host 810 interacts with high data RF transponder 814, NFC circuit 828 and RF power circuit 822. High data rate RF transponder 814 may be capable of multi-gigabits per second data transfer capability. Additional features of the high data rate RF transponder 814 may be low latency, full duplex operation, and multiple channel operation. The high data rate RF transponder 814 may communicate with the system host 810 via a high-speed bidirectional digital bus. The high data rate RF transponder 814 may be configurable by parameters set in the control register 818. The control register may be controlled from the initialisation watchdog circuit 816. Initialisation watchdog circuit 816 may in turn be controlled either by system host 810 for by NFC circuit 828. Control register 818 and initialisation watchdog circuit 816 may form an authentication controller. Initialisation watchdog circuit 816 may periodically trigger a repeat of the authentication cycle. If the separation between the base unit 800 and contactless unit 900 increases beyond the range of the NFC link after the original authentication, the data transfer is disabled. This gives an equivalent functionality to unplugging a conventional wired connection with galvanic or ohmic connections.

Figure 8 further shows a contactless unit 900 having a high data rate RF transponder 910. Direct data rate RF transponder 910 may be connected to data sink 912. High data rate transponder 910 may be connected to sensor digitiser 914. High data rate transponder 910 may be connected to data source 916. Control register 918 may be connected to high data rate RF transponder 910. Control register 918 may be connected to initialisation watchdog 920. Initialisation watchdog 920 may be connected to NFC circuit 922. NFC circuit 922 may be connected to NFC antenna 924. RF power antenna 926 may be connected to RF power receiver circuit 928. RF power receiver circuit 928 may be connected to DC supply circuit 930. DC supply circuit 930 may supply power to the circuitry contactless unit 900.

In the contactless unit 900, the higher rate RF transponder 910 may be capable of multi-Gigabits per second data transfer capability, matching the properties of the RF transponder circuit of the base unit 800. The high data rate RF transponder 910 may be configurable by parameters set in the control register 918. The high data rate RF transponder 910 may interact with local storage elements which provide a data sink 912 and/or data source 916 function. The high data rate RF transponder 910 may further communicate with a sensor 914 and transfer the data from the sensor 914 to the base unit 800. The NFC circuit 912 may communicate with initialisation watchdog circuit 920 via a data bus. Initialisation watchdog circuit 920 may communicate with DC supply 930 to provide the DC output parameters. RF power receiver 928, RF power antenna 96, and DC supply 930 may form a wireless RF power receiver section. RF power receiver 928 may convert energy from an RF carrier into an approximate DC voltage. DC supply 930 may provide further stabilisation and conditioning of the DC signal determined by the programmable output parameters obtained from the initialisation watchdog circuit 920. The authentication protocol between base unit 800 and contactless unit 900 may be similar to that described for other embodiments. Embodiments of base unit 800 and contactless unit 900 may be included in an MRI scanner where sensor data may be captured by the sensor digitizer 914 and transferred to a base unit 800 via the high speed RF data link.
Embodiments may include a replacement connection for a PC docking station including wireless charging pods and a multi-GBPS bidirectional data transfer function. Embodiments may include contactless USB connectors whereby at least part of the base unit is formed as part of a USB socket and at least part of a contactless unit is formed as part of a USB plug. In embodiments a contactless unit may be included on an SD memory card, which may be inserted into a slot having a base unit. Base units and contactless units may be used to simplify backplane connections for example in Internet data centres. One or more base units and contactless units may also be used in MRI scanners to replace conventional connections. In embodiments, one or more base units and contactless units may be included in a wafer stepper. In embodiments at least part of a base unit may be incorporated into an Ethernet socket. At least part of a contactless unit may be incorporated into an Ethernet plug. Embodiments of the base unit and contactless unit may be incorporated into low voltage differential signalling (LVDS) connectors, replacing the conventional galvanic or ohmic connection.

Features which are described in the context of separate embodiments may also be provided in combination in a single embodiment. Conversely, various features which are, for brevity, described in the context of a single embodiment, may also be provided separately or in any suitable sub combination.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A base-unit (100) for non-galvanic coupling to a contactless-unit, the base-unit comprising:
an antenna (16) coupled to an RF power source (14),
at least one data-link (12, 22),
an authentication controller (10) coupled to the at least one data-link,
a data interface (20) for coupling at least one of a data source and data sink to the base unit, the data interface being coupled to the at least one data-link, and a mechanical connector for coupling to the contactless unit, and wherein
the base-unit is operable to:
transmit and/or receive payload data via the data interface,
wirelessly transmit RF power from the RF power source to the contactless-unit in physical proximity to the base-unit,
transmit and/or receive authentication data via the at least one data-link to authenticate a non-galvanic connection to the contactless-unit only when the contactless-unit is in physical proximity to the base-unit,
transmit and/or receive payload data via the at least one data link following the authentication of the non-galvanic connection to the contactless unit and wherein in operation the relative position of the base-unit and the contactless unit non-galvanically coupled to the base unit is fixed,
and wherein the authentication controller further comprises a watchdog timer (816) and the base-unit is further operable to periodically re-authenticate the non galvanic connection to the contactless-unit, the re-authentication period being determined by the watchdog timer, and to disable further payload data transmission and/or reception if the re-authentication of the non-galvanic connection fails.

2. The base-unit of claim 1 wherein the authentication controller is coupled to the RF power source and the authentication controller is operable to disable RF power transmission in response to the failure of the authentication of the non-galvanic connection.

3. The base-unit of any preceding claim wherein the at least one data-link comprises at least one of a millimetre wave transmitter, a millimetre wave receiver, a laser, and a photodetector.

4. The base-unit of any preceding claim wherein the at least one data link comprises a first data-link and a second data-link (52, 64), the first and second data-links being coupled to the authentication controller (50), and wherein
the first data-link comprises a near field communication circuit (60) coupled to a second antenna and the base-unit is operable to
transmit and/or receive authentication data via the first data-link to authenticate the non-galvanic connection to the contactless-unit only when the contactless-unit is in physical proximity to the base-unit, and
transmit and/or receive payload data via the second data-link following the authentication of the non-galvanic connection to the contactless unit via the first data-link.

5. The base-unit of claim 3 wherein the authentication controller is coupled to the RF power source and wherein the authentication controller is operable to enable the RF power transmission following the authentication of the non-galvanic connection.

6. The base-unit of claims 4 wherein the second data link comprises a third antenna (90) coupled to at least one of an RF transmitter and an RF receiver.

7. The base unit of any preceding claim wherein the mechanical connector comprises one of USB socket, and an ethernet socket.

8. A contactless-unit (200) for non-galvanic coupling to a base-unit, the contactless-unit comprising:
an antenna (36) coupled to an RF power receiver (34),
at least one data-link (32, 40), and
an authentication controller (30) coupled to the at least one data-link,
a data interface (38) for coupling at least one of a data source and data sink to the contactless unit, the data interface being coupled to the at least one data-link,
and a mechanical connector for coupling to the base unit, and wherein the contactless-unit is operable to
transmit and/or receive payload data via the data interface,
receive RF power provided from the base-unit only when the base-unit is in physical proximity to the contactless-unit,
convert the received RF power to supply power to circuits in the contactless-unit,
transmit and/or receive authentication data via the at least one data-link to authenticate a non-galvanic connection to the base-unit only when a base-unit is in physical proximity to the contactless-unit, and
transmit and/ or receive payload data via the at least one data link following the authentication of the non-galvanic connection to the base unit, wherein the authentication controller further comprises a watchdog timer (920) and wherein the contactless-unit is operable to periodically re-authenticate the non galvanic connection to the base-unit, the re-authentication period being determined by the watchdog timer, and to disable further data transmission and/or reception if the re-authentication of the non-galvanic connection fails, and wherein in operation the relative position of the contactless-unit and the base unit non-galvanically coupled to the contactless unit is fixed.

9. The contactless-unit of any of claim 8 wherein the at least one data-link comprises at least one of a millimetre wave transmitter, a millimetre wave receiver, a laser, and a photodetector.

10. The contactless-unit of any of claims 8 or 9 wherein the at least one data link comprises a first data-link and a second data-link, the first and second data-links being coupled to the authentication controller, wherein
the first data-link comprises a second antenna (82) coupled to a near field communication circuit (80) and the contactless-unit is operable to
transmit and/or receive authentication data via the first data-link to authenticate the non-galvanic connection to the base-unit only when the base unit is placed in physical proximity to the contactless-unit, and
transmit and/or receive payload data via the second data link following the authentication of the non-galvanic connection to the base unit via the first data-link.

11. The contactless-unit of claim 10 wherein the second data link further comprises a third antenna (96) coupled to at least one of an RF transmitter and an RF receiver.

12. The contactless-unit of claim 11 further comprising:
a third data-link coupled to the authentication controller, the third data-link comprising a near field communication circuit (714) coupled to a fourth antenna (716),
a fourth data-link (710,712) coupled to the authentication controller, and
a fifth antenna (720) coupled to an RF power source (718); wherein
the contactless-unit is further operable to
transmit RF power to a further contactless-unit in physical proximity to the contactless unit,
transmit and/or receive authentication data via the third data-link to authenticate a non-galvanic connection to the further contactless-unit only when the further contactless-unit is in physical proximity to the contactless-unit, and
transmit and/or receive data between the contactless-unit and the further contactless-unit via the fourth data link element following the authentication of the non-galvanic connection.

13. The contactless unit of claim 12 further comprising at least one of a sensor (914) and a storage element (916) coupled to the data interface.

14. The contactless-unit of any of claims 8 to 13 wherein the mechanical connector is one of an ethernet plug and a USB plug.

## Patentansprüche

1. Eine Basiseinheit (100) zum nicht galvanischen Koppeln an eine kontaktlose Einheit, wobei die Basiseinheit aufweist:
eine Antenne (10), die gekoppelt ist an eine RF Leistungsquelle (14),
zumindest eine Datenverbindung (12, 22),
einen Authentifikationskontroller (10), der gekoppelt ist an die zumindest eine Datenverbindung,
eine Datenschnittstelle (20) zum Koppeln zumindest einer von einer Datenquelle und Datensenke an die Basiseinheit, wobei die Datenschnittstelle gekoppelt ist an die zumindest eine Datenverbindung, und einen mechanischen Konnektor zum Koppeln an die kontaktlose Einheit, und wobei
die Basiseinheit betreibbar ist zum:
Übertragen und/oder Empfangen von Ladungs Daten via der Datenschnittstelle,
drahtlosen Übertragen von RF Leistung von der RF Leistungsquelle an die kontaktlose Einheit in physischer Nähe zu der Basiseinheit,
Übertragen und/oder Empfangen von Authentifikationsdaten mittels der zumindest einen Datenverbindung, zum Authentifizieren einer nicht galvanischen Verbindung zu der kontaktlosen Einheit nur wenn die kontaktlose Einheit in physischer Nähe zu der Basiseinheit ist,
Übertragen und/oder Empfangen von Ladungs Daten mittels der zumindest einen Datenverbindung, folgend der Authentifikation von der nicht galvanischen Verbindung zu der kontaktlosen Einheit, und wobei bei Betrieb, die relative Position von der Basiseinheit und der kontaktlosen Einheit, die nicht galvanisch gekoppelt ist an die Basiseinheit, fixiert ist, und wobei der Authentifikationskontroller ferner aufweist einen Watchdog Zeitgeber (816) und die Basiseinheit ferner betreibbar ist zum periodischen Reauthentifizieren der nicht galvanischen Verbindung an die kontaktlose Einheit, wobei die Reauthentifikationsperiode bestimmt wird mittels des Watchdog Zeitgebers, und zum Deaktivieren weiterer Ladungs Datenübertragung und/oder Empfang, wenn das Reauthentifizieren von der nicht galvanisch gekoppelten Verbindung fehlschlägt.

2. Die Basiseinheit gemäß Anspruch 1, wobei der Authentifikationskontroller gekoppelt ist an
die RF Leistungsquelle und der Authentifikationskontroller betreibbar ist zum Deaktivieren von RF Übertragung in Antwort auf das Fehlschlagen von dem Authentifikationskontroller der nicht galvanischen Verbindung.

3. Die Basiseinheit gemäß einem der vorhergehenden Ansprüche, wobei
die zumindest eine Datenverbindung aufweist zumindest einen von einem Millimeter Wellentransmitter, einem Millimeter Wellenempfänger, einem Laser, und einem Fotodetektor.

4. Die Basiseinheit gemäß einem der vorhergehenden Ansprüche, wobei
die zumindest eine Datenverbindung aufweist eine erste Datenverbindung und eine zweite Datenverbindung (52,64), wobei die erste Datenverbindung und die zweite Datenverbindung gekoppelt sind an den Authentifikationskontroller (50), und wobei
die erste Datenverbindung aufweist einen Nahfeld Kommunikationsschaltkreis (60), der gekoppelt ist an eine zweite Antenne und die Basiseinheit betreibbar ist zum
Übertragen und/oder Empfangen von Authentifikationsdaten mittels der ersten Datenverbindung zum Authentifizieren der nicht galvanischen Verbindung zu der kontaktlosen Einheit, nur wenn die kontaktlose Einheit in physischer Nähe zu der Basiseinheit ist,
Übertragen und/oder Empfangen von Ladungs Daten mittels der zweiten Datenverbindung, folgend der Authentifizierung von der nicht galvanischen Verbindung zu der kontaktlosen Einheit mittels der ersten Datenverbindung.

5. Die Basiseinheit gemäß Anspruch 3, wobei
der Authentifikationskontroller gekoppelt ist an die RF Leistungsquelle und wobei der Authentifikationskontroller betreibbar ist zum Aktivieren der RF Leistungsübertragung, folgend der Authentifikation von der nicht galvanischen Verbindung.

6. Die Basiseinheit gemäß Anspruch 4, wobei
die zweite Datenverbindung aufweist eine dritte Antenne (90), die gekoppelt ist an einen von einem RF Transmitter und einen RF Empfänger.

7. Die Basiseinheit gemäß einem der vorhergehenden Ansprüche, wobei
der mechanische Konnektor aufweist einen von einem USB Sockel und einem Ethernet Sockel.

8. Eine kontaktlose Einheit (200) zum galvanischen Koppeln an eine Basiseinheit, wobei die kontaktlose Einheit aufweist:
eine Antenne (36), die gekoppelt ist an einen RF Leistungsempfänger (34),
zumindest eine Datenverbindung (32, 40),
einen Authentifikationskontroller (30), der gekoppelt ist an die zumindest eine Datenverbindung,
eine Datenschnittstelle (38) zum Koppeln zumindest einer von einer Datenquelle und Datensenke an die kontaktlose Einheit, wobei die Datenschnittstelle gekoppelt ist an die zumindest eine Datenverbindung,
und einen mechanischen Konnektor zum Koppeln an die Basiseinheit, und wobei die kontaktlose Einheit betreibbar ist zum:
Übertragen und/oder Empfangen von Ladungs Daten mittels der Datenschnittstelle, Empfangen von RF Leistung bereitgestellt von der Basiseinheit, nur wenn die Basiseinheit in physischer Nähe zu der kontaktlosen Einheit ist,
Konvertieren von der empfangen RF Leistung zum Versorgen der Schaltkreise in der kontaktlosen Einheit mit Leistung,
Übertragen und/oder Empfangen von Authentifikationsdaten mittels der zumindest einen Datenverbindung, zum Authentifizieren einer nicht galvanischen Verbindung zu der Basiseinheit nur wenn die Basiseinheit in physischer Nähe zu der kontaktlosen Einheit ist, und
Übertragen und/oder Empfangen von Ladungs Daten mittels der zumindest einen Datenverbindung, folgend der Authentifikation von der nicht galvanischen Verbindung zu der Basiseinheit,
wobei der Authentifikationskontroller ferner aufweist einen Watchdog Zeitgeber (920) und die kontaktlose Einheit betreibbar ist zum periodischen Reauthentifizieren der nicht galvanischen Verbindung an die Basiseinheit, wobei die Reauthentifikationsperiode bestimmt wird mittels des Watchdog Zeitgebers, und zum Deaktivieren weiterer Ladungs Datenübertragung und/oder Empfang, wenn die Reauthentifikation von der nicht galvanisch gekoppelten Verbindung fehlschlägt, und wobei bei Betrieb, die relative Position von der kontaktlosen Einheit und der Basiseinheit, die nicht galvanisch gekoppelt ist an die kontaktlose Einheit, fixiert ist.

9. Die kontaktlose Einheit gemäß Anspruch 8, wobei
die zumindest eine Datenverbindung aufweist zumindest einen von einem Millimeter Wellentransmitter, einem Millimeter Wellenempfänger, einem Laser, und einem Fotodetektor.

10. Die kontaktlose Einheit gemäß Anspruch 8 oder 9, wobei die zumindest eine Datenverbindung aufweist
eine erste Datenverbindung und eine zweite Datenverbindung, wobei die erste Datenverbindung und die zweite Datenverbindung gekoppelt sind an den Authentifikationskontroller, und wobei
die erste Datenverbindung aufweist eine zweite Antenne (82), die gekoppelt ist an einen Nahfeld Kommunikationsschaltkreis (80) und die kontaktlose Einheit betreibbar ist zum
Übertragen und/oder Empfangen von Authentifikationsdaten mittels der ersten Datenverbindung zum Authentifizieren der nicht galvanischen Verbindung zu der Basiseinheit nur wenn die Basiseinheit in physischer Nähe zu der kontaktlosen Einheit ist,
Übertragen und/oder Empfangen von Ladungs Daten mittels der zweiten Datenverbindung, folgend der Authentifikation von der nicht galvanischen Verbindung zu der Basiseinheit mittels der ersten Datenverbindung.

11. Die kontaktlose Einheit gemäß Anspruch 10, wobei die zweite Datenverbindung ferner aufweist eine dritte Antenne (96), die gekoppelt ist an zumindest einen von einem RF Transmitter und einen RF Empfänger.

12. Die kontaktlose Einheit gemäß Anspruch 11, ferner aufweisend:
eine dritte Datenverbindung, die gekoppelt ist an den Authentifikationskontroller, wobei die dritte Datenverbindung aufweist einen Nahfeld Kommunikationsschaltkreis (714), der gekoppelt ist an eine vierte Antenne (716),
eine vierte Datenverbindung (sieben 10,712), die gekoppelt ist an den Authentifikationskontroller, und
eine fünfte Antenne (720), die gekoppelt ist an eine RF Leistungsquelle (718), wobei die kontaktlose Einheit ferner betreibbar ist zum
Übertragen von RF Leistung an eine weitere kontaktlose Einheit in physischer Nähe zu der kontaktlosen Einheit,
Übertragen und/oder Empfangen von Authentifikationsdaten mittels der dritten Datenverbindung zum Authentifizieren einer nicht galvanischen Verbindung zu der weiteren kontaktlosen Einheit, nur wenn die weitere kontaktlose Einheit in physischer Nähe zu der kontaktlosen Einheit ist,
Übertragen und/oder Empfangen von Daten zwischen der kontaktlosen Einheit und der weiteren kontaktlosen Einheit mittels dem vierten Datenverbindungselement, folgend der Authentifikation von der nicht galvanischen Verbindung.

13. Die kontaktlose Einheit gemäß Anspruch 12, ferner aufweisend zumindest einen Sensor (914) und ein Speicherelement (916), die gekoppelt sind an die Datenschnittstelle.

14. Die kontaktlose Einheit gemäß einem der Ansprüche 8 bis 13 wobei
der mechanische Konnektor einer ist von einem USB Sockel und einem Ethernet Sockel.

## Revendications

1. Unité de base (100) pour le couplage non galvanique à une unité sans contact, l'unité de base comprenant
une antenne (16) couplée à une source de puissance RF (14),
au moins une liaison de données (12, 22),
un contrôleur d'authentification (10) couplé à l'au moins une liaison de données,
une interface de données (20) destinée à coupler au moins l'une d'une source de données et d'une destination de données à l'unité de base, l'interface de données étant couplée à l'au moins une liaison de données, et un connecteur mécanique destiné à être couplé à l'unité sans contact, et l'unité de base étant exploitable pour :
transmettre et/ou recevoir des données de charge utile par l'intermédiaire de l'interface de données,
transmettre en mode sans fil la puissance RF depuis la source de puissance RF jusqu'à l'unité sans contact à proximité physique de l'unité de base,
transmettre et/ou recevoir des données d'authentification par l'intermédiaire de l'au moins une liaison de données pour authentifier une connexion non galvanique à l'unité sans contact uniquement quand l'unité sans contact est à proximité physique de l'unité de base,
transmettre et/ou recevoir des données de charge utile par l'intermédiaire de l'au moins une liaison de données après l'authentification de la connexion non galvanique à l'unité sans contact et dans laquelle en service la position relative de l'unité de base et de l'unité sans contact couplée de manière non galvanique à l'unité de base est fixe, et dans laquelle le contrôleur d'authentification comprend en outre une temporisation chien de garde (816) et l'unité de base est exploitable en outre pour réauthentifier périodiquement la connexion non galvanique à l'unité sans contact, la période de réauthentification étant déterminée par la temporisation chien de garde, et désactiver toute autre transmission et/ou réception de données de charge utile en cas d'échec de la réauthentification de la connexion non galvanique.

2. Unité de base selon la revendication 1 dans laquelle le contrôleur d'authentification est couplé à la source de puissance RF et le contrôleur d'authentification est exploitable pour désactiver la transmission de puissance RF en réponse à l'échec de l'authentification de la connexion non galvanique.

3. Unité de base selon l'une quelconque des revendications précédentes dans laquelle l'au moins une liaison de données comprend au moins l'un d'un émetteur à ondes millimétriques, d'un récepteur à ondes millimétriques, d'un laser et d'un photodétecteur.

4. Unité de base selon l'une quelconque des revendications précédentes dans laquelle l'au moins une liaison de données comprend une première liaison de données et une seconde liaison de données (52, 64), les première et seconde liaisons de données étant couplées au contrôleur d'authentification (50), et dans laquelle
la première liaison de données comprend un circuit de communication en champ proche (60) couplé à une deuxième antenne et l'unité de base est exploitable pour
transmettre et/ou recevoir des données d'authentification par l'intermédiaire de la première liaison de données pour authentifier la connexion non galvanique à l'unité sans contact uniquement quand l'unité sans contact est à proximité physique de l'unité de base, et
transmettre et/ou recevoir des données de charge utile par l'intermédiaire de la seconde liaison de données après l'authentification de la connexion non galvanique à l'unité sans contact par l'intermédiaire de la première liaison de données.

5. Unité de base selon la revendication 3 dans laquelle le contrôleur d'authentification est couplé à la source de puissance RF et dans laquelle le contrôleur d'authentification est exploitable pour activer la transmission de puissance RF après l'authentification de la connexion non galvanique.

6. Unité de base selon la revendication 4 dans laquelle la seconde liaison de données comprend une troisième antenne (90) couplée à au moins l'un d'un émetteur RF et d'un récepteur RF.

7. Unité de base selon l'une quelconque des revendications précédentes dans laquelle le connecteur mécanique comprend l'une d'une prise femelle USB et d'une prise femelle Ethernet.

8. Unité sans contact (200) destinée à être couplée de manière non galvanique à une unité de base, l'unité sans contact comprenant :
une antenne (36) couplée à un récepteur de puissance RF (34) ,
au moins une liaison de données (32, 40), et
un contrôleur d'authentification (30) couplé à l'au moins une liaison de données,
une interface de données (38) destinée à coupler au moins l'une d'une source de données et d'une destination de données à l'unité sans contact, l'interface de données étant couplée à l'au moins une liaison de données,
et un connecteur mécanique destiné à être couplé à l'unité de base, et
l'unité sans contact étant exploitable pour :
transmettre et/ou recevoir des données de charge utile par l'intermédiaire de l'interface de données,
recevoir la puissance RF fournie par l'unité de base uniquement quand l'unité de base est à proximité physique de l'unité sans contact,
convertir la puissance RF reçue en puissance d'alimentation des circuits dans l'unité sans contact,
transmettre et/ou recevoir des données d'authentification par l'intermédiaire de l'au moins une liaison de données pour authentifier une connexion non galvanique à l'unité de base uniquement quand une unité de base est à proximité physique de l'unité sans contact, et
transmettre et/ou recevoir des données de charge utile par l'intermédiaire de l'au moins une liaison de données après l'authentification de la connexion non galvanique à l'unité de base,
dans laquelle le contrôleur d'authentification comprend en outre une temporisation chien de garde (920) et l'unité sans contact étant exploitable pour réauthentifier périodiquement la connexion non galvanique à l'unité de base, la période de réauthentification étant déterminée par la temporisation chien de garde, et désactiver toute autre transmission et/ou réception de données en cas d'échec de la réauthentification de la connexion non galvanique, et dans laquelle en service la position relative de l'unité sans contact et de l'unité de base couplée de manière non galvanique à l'unité sans contact est fixe.

9. Unité sans contact selon la revendication 8 dans laquelle l'au moins une liaison de données comprend au moins l'un d'un émetteur à ondes millimétriques, d'un récepteur à ondes millimétriques, d'un laser et d'un photodétecteur.

10. Unité sans contact selon l'une quelconque des revendications 8 ou 9 dans laquelle l'au moins une liaison de données comprend une première liaison de données et une deuxième liaison de données, les première et deuxième liaisons de données étant couplées au contrôleur d'authentification, dans laquelle
la première liaison de données comprend une deuxième antenne (82) couplée à un circuit de communication en champ proche (80) et l'unité sans contact est exploitable pour
transmettre et/ou recevoir des données d'authentification par l'intermédiaire de la première liaison de données pour authentifier la connexion non galvanique à l'unité de base uniquement quand l'unité de base est placée à proximité physique de l'unité sans contact, et
transmettre et/ou recevoir des données de charge utile par l'intermédiaire de la deuxième liaison de données après l'authentification de la connexion non galvanique à l'unité de base par l'intermédiaire de la première liaison de données.

11. Unité sans contact selon la revendication 10 dans laquelle la deuxième liaison de données comprend en outre une troisième antenne (96) couplée à au moins l'un d'un émetteur RF et d'un récepteur RF.

12. Unité sans contact selon la revendication 11 comprenant en outre :
une troisième liaison de données couplée au contrôleur d'authentification, la troisième liaison de données comprenant un circuit de communication en champ proche (714) couplé à une quatrième antenne (716) ,
une quatrième liaison de données (710, 712) couplée au contrôleur d'authentification, et
une cinquième antenne (720) couplée à une source de puissance RF (718) ;
l'unité sans contact étant exploitable en outre pour
transmettre une puissance RF à une autre unité sans contact à proximité physique de l'unité sans contact,
transmettre et/ou recevoir des données d'authentification par l'intermédiaire de la troisième liaison de données pour authentifier une connexion non galvanique à une autre unité sans contact uniquement quand l'autre unité sans contact est à proximité physique de l'unité sans contact, et
transmettre et/ou recevoir des données entre l'unité sans contact et l'autre unité sans contact par l'intermédiaire du quatrième élément de liaison de données après l'authentification de la connexion non galvanique.

13. Unité sans contact selon la revendication 12 comprenant en outre au moins l'un d'un capteur (914) et d'un élément de mémorisation (916) couplé à l'interface de données.

14. Unité sans contact selon l'une quelconque des revendications 8 à 13 dans laquelle le connecteur mécanique est l'un d'une prise mâle Ethernet et d'une prise mâle USB.
